(19) Europäisches Patentamt / European Patent Office / Office européen des brevets

(11) **EP 2 175 303 B1**

(12) **EUROPEAN PATENT SPECIFICATION**

(45) Date of publication and mention of the grant of the patent:
**03.12.2014 Bulletin 2014/49**

(51) Int Cl.:
*G01S 17/42* *(2006.01)*    *G02B 26/10* *(2006.01)*
*G02B 7/182* *(2006.01)*    *G01S 7/481* *(2006.01)*

(21) Application number: **09425389.5**

(22) Date of filing: **05.10.2009**

(54) **Laser scanning device**

Laserabtastvorrichtung

Appareil de balayage à laser

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.10.2008 IT MI20081778**

(43) Date of publication of application:
**14.04.2010 Bulletin 2010/15**

(73) Proprietor: **SELEX ES S.p.A.**
**00195 Roma (IT)**

(72) Inventor: **Cottalasso, Maurizio**
**16136 Genova (IT)**

(74) Representative: **Leihkauf, Steffen Falk et al**
**Jacobacci & Partners S.p.A.**
**Via Senato 8**
**20121 Milano (IT)**

(56) References cited:
**EP-A- 1 671 739    EP-B1- 1 423 730**
**US-A- 5 383 645    US-B1- 6 461 021**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a laser scanning device, and in particular, to a laser scanning device for vehicles.

To the purpose of the present invention, by vehicles is meant aircraft vehicles, such as, for example, a helicopter, an airplane, and so on.

A laser scanning device for vehicles is a tool that is installable on board of a vehicle for the detection of obstacles around which to move, which are present on the movement route of the vehicle itself and for the well-timed signalling to the cabin crew of the need to perform appropriate moving around manoeuvres.

EP 1423730 B1 discloses a device according to the preamble of claim 1.

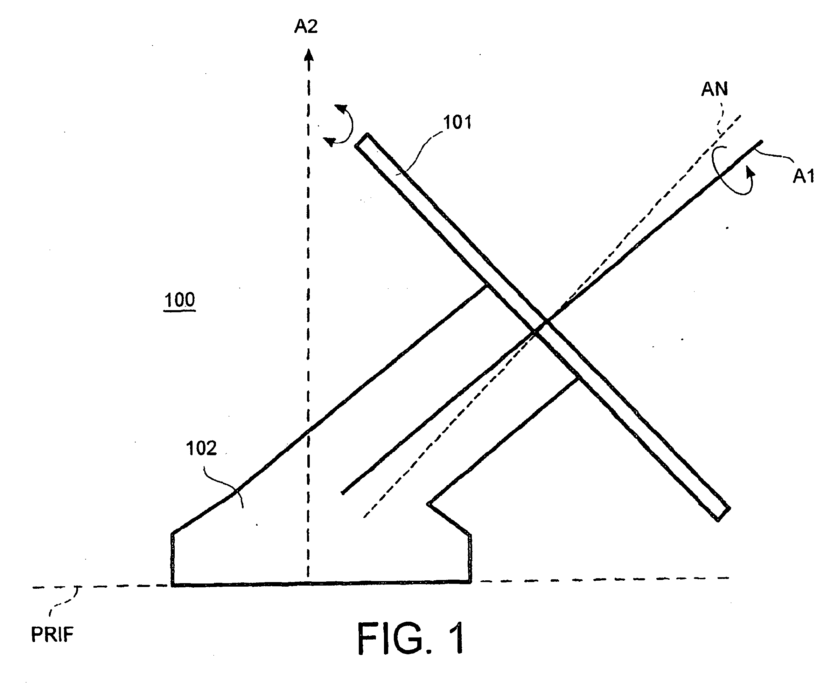

A laser scanning device of the type well known in the literature by the name of Palmer Scanner is schematically shown in Figure 1, and indicated with the numeral reference 100.

The laser scanning device 100 consists in a reflecting mirror 101 mounted on a support 102.

As it is known, the laser scanning device 100 is arranged to allow the reflecting mirror 101 a first rotation around a first rotation axis A1 passing through the centre of the reflecting mirror 101 and having a predetermined inclination (typically, equal to about 7°) compared to an axis AN that is normal to the reflecting mirror 101.

Typically, the normal axis AN to the reflecting mirror 101 results to be inclined of about 45° compared to a reference plane PRIF representative of the support base 102. The support base 102 is intended to contact a portion of the vehicle on which the laser scanning is installed.

The angle between the normal axis AN to the reflecting mirror 101 and the first rotation axis A1 is defined in the literature as swash angle, and the respective rotation movement of the reflecting mirror about the first rotation axis A1 is defined, in a completely similar manner, as swash movement.

The laser scanning device 100 results to be arranged to allow the reflecting mirror 101 a second rotation to the right and to the left, alternatively, relative to a reference position of a predetermined angular value about a second rotation axis A2 that is normal to the reference plane PRIF. The second rotation axis A2 results to be normal to the reference plane PRIF and, as it is known, is also defined as azimuth axis. Correspondingly, the reflecting mirror rotation movement about the second rotation axis (azimuth) is defined as movement in azimuth of the reflecting mirror 101.

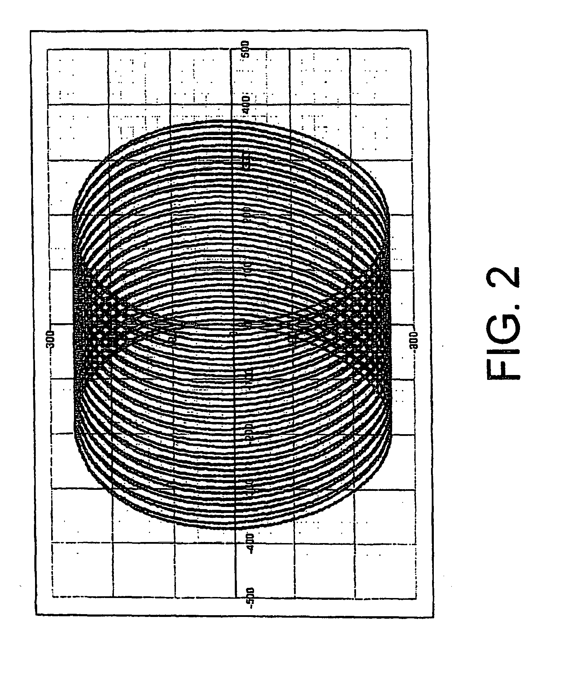

Referring now to Fig. 2, the first rotation movement of the reflecting mirror 101 about the first rotation axis A1 (swash movement) is representative of a first scanning movement, and allows the laser scanning device 100 to trace a single scanning figure having the shape of an elongated circle. To the purposes of the present invention, the elongated circle-shaped single scanning figure is also defined as echo.

The rotation movement (movement in azimuth) of the second reflecting mirror 101 about the second rotation axis A2 is representative of a second scanning movement, and allows the laser scanning device 100 to translate rightwards or leftwards, alternatively, the elongated circle-shaped scanning figure so as to obtain an echo distribution such that illustrated in Fig. 2.

The Palmer Scanner type laser scanning device 100 has the drawback of mainly carrying out a front scan, therefore not ensuring an optimal scanning figure by the scanning device in the case in which the vehicle (for example, a helicopter) covers trajectories with very narrow bends that involve additional inclinations of the vehicle.

A possible solution to the problem pointed out above is to increase the azimuth angle. However, it shall to be noticed that during the first swash movement, the reflecting mirror rotates at such a speed as to generate gyroscopic forces that create vibrations and imbalance of the laser scanning device. That being so, an increase of the azimuth angle to improve the scanning device 100 scanning figure can involve, disadvantageously, an increase of the above-mentioned gyroscopic forces and a consequent worsening of the balance of the scanning device itself.

The object of the present invention is to provide a laser scanning device that allows at least partially overcoming the drawbacks cited above in relation to the cited prior art, and particularly that results to be more reliable compared to it in the quality of the generable scanning figure and in the stability and balance of the scanning device itself during the functioning thereof on board of the vehicle.

Such object is achieved by a laser scanning device according to claim 1.

Preferred embodiments of the laser scanning device according to the invention are defined by the dependent claims 2-11.

The object of the present invention is also a laser scanning system as defined in claim 12 and preferred embodiments thereof as defined in claims 13-15.

Further characteristics and advantages of the laser scanning device according to the invention will result from the description reported herein below of preferred exemplary embodiments, which are given as an indicative, non-limiting example, with reference to the attached figures, in which:

- Fig. 1 schematically illustrates a side view of a laser scanning device belonging to the prior art;
- Fig. 2 illustrates a diagram representative of a scanning figure obtained by the laser scanning device of Fig. 1;
- Fig. 3 illustrates a perspective view of a laser scanning device according to an embodiment of the invention;

- Fig. 4 illustrates a diagram representative of a scanning figure obtained with the laser scanning device of Fig. 3;
- Figs. 5 to 11, and 13 illustrate reference diagrams for calculation algorithms executable in a laser scanning system that employs the scanning device of Fig. 3; and
- Figs. 12a and 12b represent diagrams representative of experimental results obtainable with the calculation algorithms executable by the laser scanning system that employs the scanning device of Fig. 3.

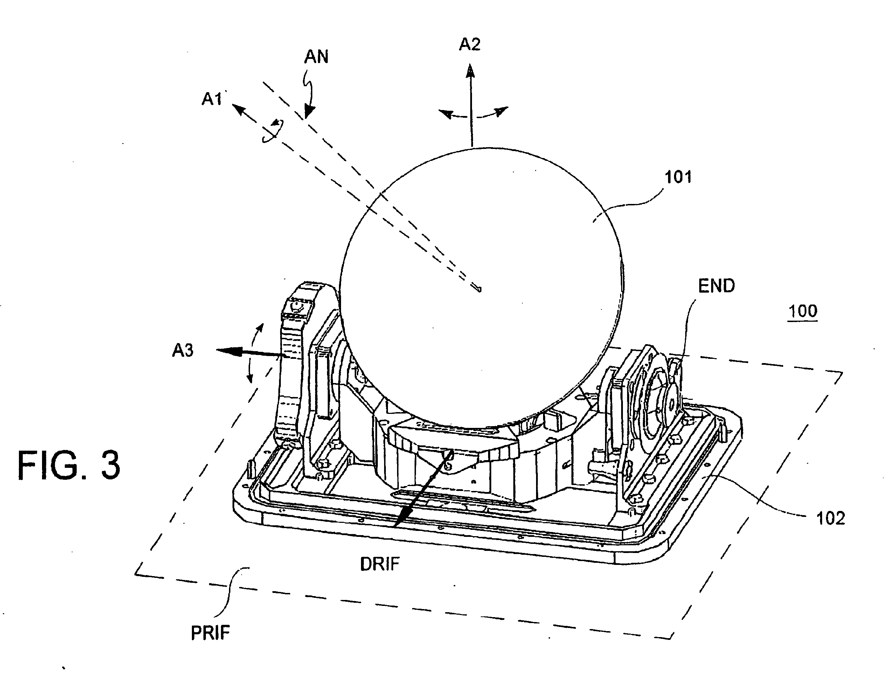

With reference to Fig. 3, a laser scanning device for an aircraft vehicle, or simply a vehicle (for example, a helicopter) according to an exemplary embodiment of the invention, has been generally indicated with the numeral reference 100.

The laser scanning device 100 comprises a reflecting mirror 101, *per* se known and preferably circular shaped, and a mechanical support 102 on which the reflecting mirror 101 results to be operatively mounted. The support 102 results to be operatively associable to an aircraft vehicle portion (not shown in the Figure) on which the laser scanning device 100 is intended to be installed.

The reflecting mirror 101 results to be arranged to perform a first so-called swash rotating movement about a respective first rotation axis A1 passing through the centre of the reflecting mirror 101. The first rotating movement of the reflecting mirror results to be representative of a first scanning movement of the scanning device 100.

It shall be noticed that the first rotation axis A1 results to be inclined of a predetermined inclination angle or swash angle relative to a normal axis AN to the surface of the reflecting mirror 101, also passing through the centre of the reflecting mirror. Typical swash angle values preferably range between 2.5° - 8°. A typical value that is employed is a swash angle equal to about 7°.

It shall be noticed that the scanning device 100 preferably comprises a first brushless type motor (not shown in the Figure), *per* se known, mechanically associated to the reflecting mirror and arranged to generate the first rotation movement (swash movement) of the reflecting mirror 101 about the first rotation axis A1. The first brushless motor represents an example of first moving means of the reflecting mirror in order to generate the swash movement thereof.

It shall be noticed that, advantageously, the first brushless type motor results to be operatively associated to the first rotation axis A1 through a direct type connection.

Furthermore, the reflecting mirror 101 results to be arranged to perform a second rotation movement, or movement in azimuth, about a second rotation axis A2 that preferably results to be normal to a reference plane PRIF that is representative of the support base 102 on which the reflecting mirror 101 is assembled. The support base is preferably the part of the support that results to be couplable by contact with a respective vehicle portion on which the scanning device 100 is installed. The second rotation movement of the reflecting mirror 101 is representative of a scanning device 100 second scanning movement.

It shall be noticed that, advantageously, the second brushless type motor results to be operatively associated to the second rotation axis A2 through a direct connection.

In more detail, the second rotation movement of the reflecting mirror about the second rotation axis A2 is such as to bring the reflecting mirror 101, alternatively, from a first scanning position, in which the projection of the first rotation axis A1 on the reference plane PRIF results to be substantially aligned with a reference direction DRIF representative of the vehicle trajectory, to a second and third scanning positions in which the projection of the first rotation axis A1 results to be inclined relative to the reference direction DRIF of a predetermined scanning angle in azimuth rightwards and leftwards, respectively.

It shall be noticed that the scanning angle in azimuth can be preferably comprised within the values range 10° - 60°. An example of a scanning angle in azimuth can be, for example, 10° rightwards and leftwards, alternatively, relative to the reference direction DRIF.

It has to be noticed that the scanning device 100 advantageously comprises a second triphase brushless type motor (not shown in the Figure), *per* se known, mechanically associated to the reflecting mirror 101 and arranged to allow the reflecting mirror 101 to perform the second rotation in azimuth about the second rotation axis A2. The second brushless type motor represents an example of second moving means of the reflecting mirror 101.

Referring again to Fig. 3, the scanning device 100 results to be advantageously arranged to generate a third rotation movement of the reflecting mirror 101 so as to vary the inclination of the reflecting mirror 101 first rotation axis A1 relative to the reference plane PRIF.

In more detail, the scanning device 100 comprises a third brushless type motor (also not shown in Fig. 3), *per* se known, which is mechanically associated, through a drive belt, to a pulley operatively associated to a third rotation axis A3 to allow the support 102 a respective third rotation movement about the above-mentioned third axis. It shall be noticed that the third triphase brushless type motor, the drive belt, and the pulley represent third moving means of the support 102 and generally of the reflecting mirror 101.

It shall be noticed that the belt-pulley connection between the third brushless type motor and the third rotation axis A3 represents an indirect connection between motor and axis that allows advantageously introducing a predetermined transmission ratio between the third brushless type motor and the third rotation axis A3. Furthermore, the presence of an indirect connection (belt - pulley) allows reducing the scanning device 100 overall dimensions.

Referring back to the third rotation axis A3 of the support 101, it is pointed out that it results to be contextually parallel to the reference plane PRIF and normal relative to the reference direction DRIF representative of the trajectory covered by the vehicle. The support 102 third rotating movement about the third rotation axis A3 advantageously allows obtaining contextually the same rotation of the reflecting mirror 101 mounted on the support 102. This involves, as stated above, the variation of the inclination of the first rotation axis A1 relative to the reference plane PRIF.

It shall be noticed that the third rotating movement of the scanning device 100 is such as to rotate the reflecting mirror 101 upwards or downwards, relative to an initial reference position, of a predetermined inclination angle , for example, about 3°.

Particularly, the third moving means of the reflecting mirror 101 are such as to generate the reflecting mirror 101 third rotating movement about the third rotation axis A3 so as to increase the first inclination angle of the first rotation axis A1 relative to the predetermined first inclination angle.

Furthermore, the third moving means of the reflecting mirror 101 are such as to generate the third rotating movement of the reflecting mirror 101 about the third rotation axis A3 so as to decrease the first inclination angle of the first rotation axis A1 relative to the predetermined first inclination angle.

It shall be noticed that the described upwards or downwards movement is also termed elevation or tilt movement and the predetermined inclination angle is termed elevation or tilt angle.

By initial reference position in elevation of the reflecting mirror 101 is meant the position in which the normal axis AN results to be inclined of a predetermined angle relative to the reference plane PRIF, for example, of about 45°.

It shall be noticed that such predetermined inclination angle between the normal axis AN and the reference plane PRIF depends on different geometric factors, among which, for example, the laser incidence direction on the reflecting mirror 101.

The scanning device 100 of the described example further comprises an encoder END, *per* se known, located on the third rotation axis A3, and preferably on the opposite side relative to that in which the pulley is located.

The encoder END results to be operatively associated to a remote control unit (not shown in the Figures) relative to the scanning device 100, which is arranged for the control of the third rotating movement of the reflecting mirror 101. The encoder END results to be such as to provide the remote control unit a piece of information representative of the inclination of the first rotation axis A1 of the reflecting mirror relative to the reference plane PRIF following the third rotating movement or tilt.

It is pointed out that the remote control unit will be described herein below in the present description with more general reference to a laser scanning system.

Similarly to the encoder END operatively associated to the third rotation axis A3, the scanning device 100 preferably comprises further and completely similar encoders (also not shown in the Figures) being operatively associated to the first rotation axis A1 and second rotation axis A2 of the reflecting mirror 101, respectively, and both being operatively connected to the remote control unit.

In more detail, the encoder operatively associated to the first rotation axis A1 of the reflecting mirror is arranged to provide the remote control unit a piece of information representative of the inclination of the first reference axis A1 relative to the normal axis AN to the reflecting mirror 101 surface. The encoder operatively associated to the second rotation axis A2 is arranged to provide the control unit a piece of information representative of the inclination of the projection of the first rotation axis A1 relative to the reference direction DRIF.

A laser scanning system according to an example of the invention will be now described.

Referring now to a laser scanning system, it comprises a laser scanning device 100 that is completely similar to that described above, and a remote control unit for the control of the laser scanning device 100.

Particularly, the remote control unit comprises a microprocessor and a memory that are operatively associated one to the other, to store and load a predetermined calculation algorithm that allows the remote control unit, on the basis of the above-mentioned information provided by the encoders associated to the rotation axes (A1, A2, A3) of the scanning device 100, controlling the inclination of each of the rotation axes and the scanning figure that can be consequently generated by the scanning device 100 itself relative to the vehicle main trajectory.

In a particular embodiment, it shall be further noticed that, still more advantageously, the remote control unit is arranged to load and perform an algorithm estimating or predicting the trajectory that a vehicle will cover in a successive time (for example, of 20 seconds) compared to the instant in which the trajectory is estimated or predicted.

It shall be noticed that, advantageously, the remote control unit results to be further arranged to control the third scanning movement of the scanning device 100 by actuating the third brushless type motor so as to vary towards the tilt angle (upwards or downwards relative to the initial reference position) as a function of the estimated or predicted trajectory.

In a further embodiment, the remote control unit is advantageously arranged to perform a calculation algorithm of the direction of the Line of Sight LOS centre.

An example of a trajectory estimation or prediction algorithm, and an example of Line of Sight centre direction determination algorithm will be described herein below in a relative APPENDIX.

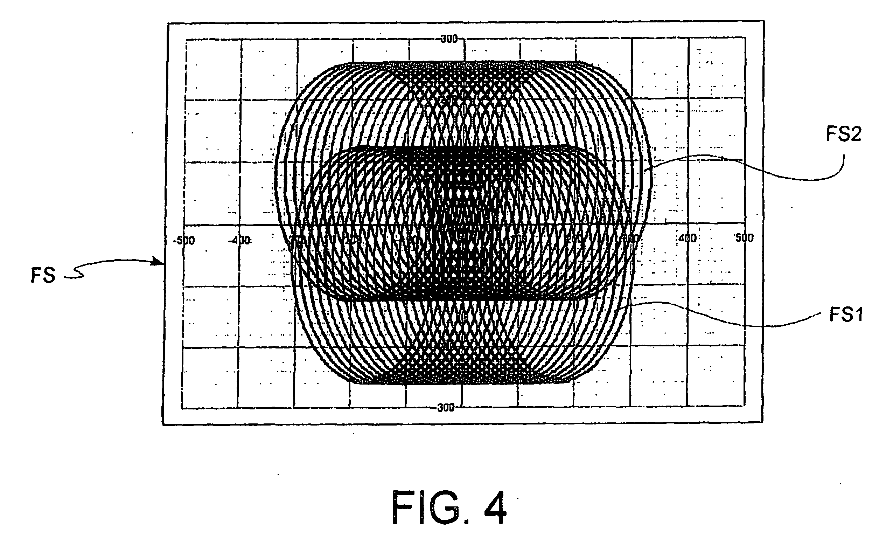

A functioning example of the laser scanning system will be now described, in which the scanning device 100 control by the remote control unit allows obtaining a scanning figure FS like the one of the example represented in Fig. 4.

The scanning device 100 results to be operatively associated to an aircraft vehicle (for example, a helicopter, not shown in the Figure) having a flight trajectory according to the reference direction DRIF.

The scanning device 100 is arranged to perform a first rotating movement of the reflecting mirror 101 about the first rotation axis A1 that is inclined relative to the normal axis AN to the surface of the reflecting mirror of a swash angle equal, for example, to about 7°. The third brushless type motor is actuated so that the swash movement occurs, for example, at a rotation speed of about 30 revolutions/s.

Furthermore, the scanning device 100 results to be arranged to perform the second rotating movement of the reflecting mirror 101 about the second rotation axis A2 so that the projection of the first rotation axis A1 move rightwards and leftwards, alternatively, relative to the reference direction DRIF with an azimuth angle of about 10°. The second brushless type motor is actuated by the control unit so that the scanning movement in azimuth rightwards and leftwards takes place, starting from the initial scanning position of the reflecting mirror, in the same time period and equal, for example, to about 1 second.

The first scanning movement (swash movement) allows the scanning device 100 to trace an elongated circle-shaped scanning figure (echo). The second scanning movement (movement in azimuth) allows translating the echo traced by the first movement and obtaining a first echo distribution FS1.

Following the trajectory control and the prediction of the future one, in the case in which narrow bends to the right or to the left are expected, the control unit performs the third rotating movement (elevation or tilt movement) of the support 102 about the third rotation axis A3 for an elevation or tilt angle that is equal, for example, to 3° upwards.

Particularly, in the case in which the vehicle is a helicopter, the third rotating movement of the support results to be controlled as a function of the helicopter trajectory and/or control as reported below: in the case of a bend to the right, the third rotating movement is such as to rotate the support 102 upwards to the right; in the case of a bend to the left, the third rotating movement is such as to rotate the support 102 upwards to the left; in the case of an acceleration (downwards oriented front part of the helicopter) or altitude gain, the third rotating movement is such as to rotate the support 102 upwards; in the case in which the helicopter decreases in altitude after a deceleration or braking, the third rotating movement is such as to rotate the support 102 downwards.

The third rotating movement (elevation or tilt movement) allows the scanning device 100 tracing and obtaining a second echo distribution FS2 in the scanning figure FS.

From a comparison between the scanning figure obtained by the scanning device 100 according to the described embodiment (Figs. 3 and 4) and the scanning figure that can be obtained with the Palmer Scanner type device (Fig. 1 and 2), it clearly appears that, for an equal scanning time, the scanning figure of Fig. 4 results to cover a larger scanning area and, above all, provides for a larger overlapping and distribution of the echoes. This advantageously allows increasing the number of obstacles that can be detected by the scanning device and appreciably reducing the error possibility.

The scanning figure of Fig. 3 (obtainable with a Palmer type scanning device belonging to the prior art) does not have a thick overlapping among the echoes, and this can involve, for example, the non-detection of an obstacle (for example, a tree) that comes to be inside the space between two adjacent echoes.

Furthermore, the addition of the third rotating movement (elevation or tilt) of the reflecting mirror 101, besides allowing the increase of the scanning area as already stated above, allows the scanning device 100 to compensate the vehicle trajectory in the case of very narrow bends, thus avoiding having to increase the swash angle.

Contextually, it shall be noticed that the fact to be able to maintain a relatively low swash angle (for example, 7°) allows the possible increase of the rotation speed of the reflecting mirror 101 about the first rotation axis A1, reducing the possibility that, due to the rotation speed increase, an excessive imbalance of the reflecting mirror occurs, such to involve a degradation of the scanning device 100 performance.

Still advantageously, the variation of the elevation or tilt angle, through the third rotating movement, during the first (swash) and the second (in azimuth) scanning movement allows obtaining, advantageously, the same elevation field of view, with a contextual reduction of the swash angle between the first rotation axis and the normal axis to the reflecting mirror.

The imbalance reduction of the scanning device advantageously allows eliminating, within the scanning device, the need to have counterbalancing weights or more resistant supports for the reflecting mirror.

Furthermore, it shall be noticed that the preferred choice to employ triphase brushless motors advantageously allows reducing possible mechanical frictions within the scanning device 100, thus further improving the performance thereof. Furthermore, the absence of the brushes avoids the presence of dusts within the scanning device 100 due to the consumption of the brushes themselves. The absence of these dusts preserves the functioning of the optical type encoders distributed within the scanning device, which are operatively associated to each of the three rotation axes of the reflecting mirror 101.

Furthermore, the absence of the brushes avoids the creation of sparks such as to cause an electric noise that is harmful for the scanning device.

Furthermore, the absence of the brushes reduces the scanning device maintenance activities that, otherwise, should provide for the replacement of the brushes themselves following their wear during the standard functioning thereof.

Finally, it is pointed out that the laser scanning device 100, besides being intended to the installation on an aircraft vehicle (helicopter), can also be advantageously arranged to be installed in a ground position to monitor the three-dimensional scenery of an internal or external environment.

To the scanning device embodiments described above, those of ordinary skill in the art, in order to meet contingent needs, will be able to make modifications, adaptations, and replacements of elements with other functionally equivalent ones, without departing from the scope of the following claims. Each of the characteristics described as belonging to a possible embodiment can be implemented independently from the other embodiments described.

**APPENDIX**

**Examples of an algorithm for the calculation of an estimate of a vehicle trajectory, and of an algorithm for the determination of the Line Of Sight (LOS)**

TRAJECTORY CALCULATION

General description

The described algorithm allows the remote control unit, which a laser scanning device is provided with, to calculate the path that a vehicle (for example, a helicopter) is going to follow in the 20 seconds following the instant of the calculation.

A first estimate approximation can be obtained through the instantaneous speed vector, which coincides in the two dimensions with the flight vector. However, the latter, during a curved path, is always directed to the tangent of the bend itself in the initial instant, therefore it is necessary to elaborate an algorithm capable of predicting curved trajectories.

Algorithm description

The algorithm calculates the trajectory by using the data provided by an inertial system, filtered with a band that takes the vehicle dynamics into account.

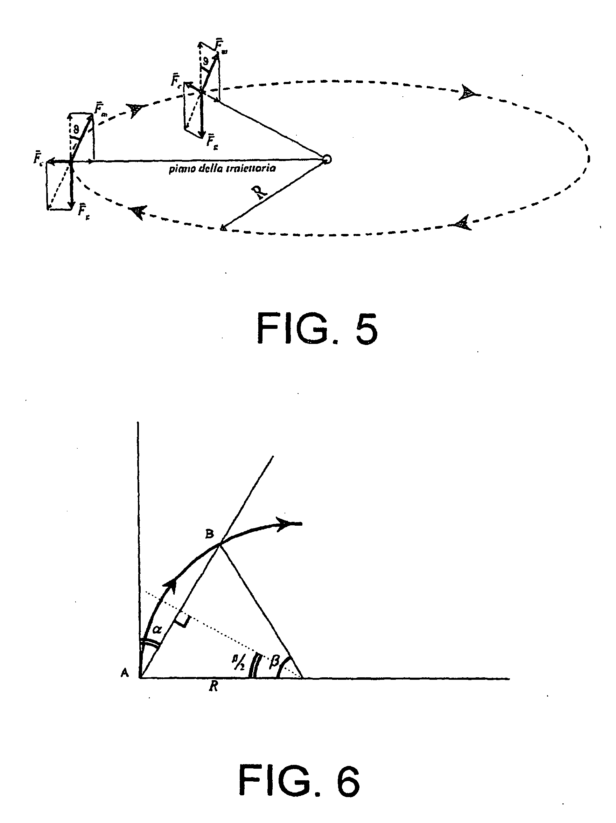

Referring now to Fig. 5, the radius of curvature R is defined as a function of the velocity modulus and the roll angle $\theta$ compensating the centrifugal force $F_c$ and the gravitational one $F_g$ (Fig. 5) to which the vehicle is subjected during the movement.

The compensation of the components of the forces that act on the vehicle during a bend bring to the following formula, that links the roll angle $\theta$ and the velocity to the radius of curvature R of the trajectory.

$$\begin{cases} F_c = F_m \cdot \sin(\vartheta) \\ F_g = F_m \cdot \cos(\vartheta) \end{cases} \qquad (1)$$

from which

$$\frac{F_c}{F_g} = \tan(\vartheta) \qquad (2)$$

Defining as $a_c$ the centrifugal acceleration, and as g the gravity acceleration, the following relationship is obtained:

$$\frac{a_c}{g} = \tan(\vartheta) \qquad (3)$$

where $a_c$ for a circular motion with a radius of curvature R and a linear velocity v, is given by the following relationship:

$$a_c = \frac{v^2}{R} \qquad (4)$$

From the relationships (3) and (4), the following relation is achieved:

$$\frac{v^2}{R \cdot g} = \tan(\vartheta) \qquad (5)$$

from which

$$R = \frac{v^2}{g \cdot \tan(\vartheta)} \qquad (6)$$

The thus-determined trajectory is placed on the horizontal plane. Subsequently, the motion determined by the components of the velocity vector $V_x$ and $V_y$ that contain a piece of information representative of a possible skid or altitude variation of the vehicle is added.

Referring to Fig. 6, the trajectory can be stored as the secant to the distance selected from a control panel associated to the remote control unit of the laser scanning device, or as a geometric set of points in the three-dimensional space.

To the purposes of a simple two-dimensional representation of the estimated trajectory, similar to the flight vector, the azimuth angle to which the secant calculated at the selected distance on the control panel points is determined, it is rotated on the horizontal plane as a function of the roll angle, and the flight vector azimuth co-ordinates are added to the thus-detected point.

<u>CALCULATION OF THE DIRECTION OF THE LINE OF SIGHT (LOS) CENTRE</u>

<u>General description</u>

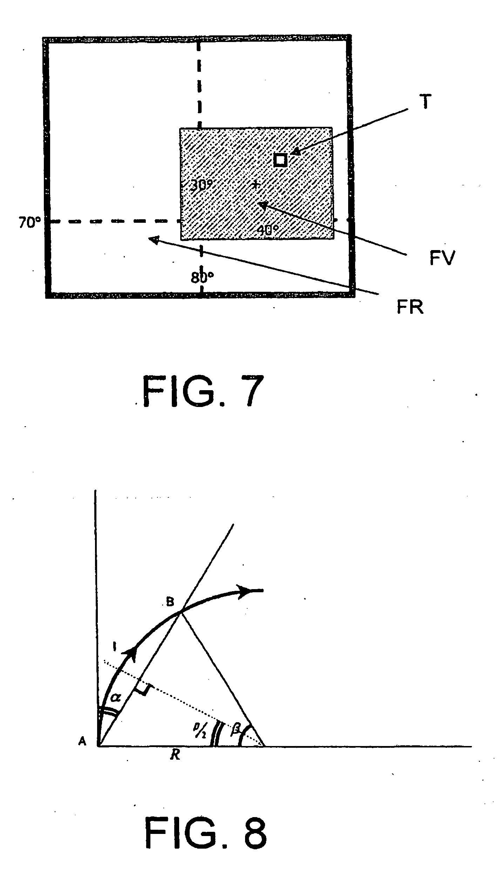

Referring to Fig. 7, the scanning figure covers a field of view FV of (30x40)° every 0.5 seconds into which vehicle trajectory T falls. It is possible to modify the centre of this field of view of $\pm$ 20° on the axis of abscissas x and the axis of ordinates y of the Laser Obstacle Avoidance & Monitoring system (LOAM) so as to be able to analyze an overall space FR of (70x80)°.

<u>CONSIDERATIONS ON THE FIELD OF VIEW</u>

<u>Time employed to exit the field of view</u>

Referring to Fig. 8, in the case in which the detector visual field has, for example, an opening defined by an angle $\alpha$, a trajectory with a radius of curvature R exits from the above-mentioned field after covering an arch subtended by an angle $\beta$ expressed by the following formula:

$$\frac{\beta}{2} = \alpha \implies \beta = 2\alpha \qquad (7)$$

The length 1 of the arch AB subtended by the angle β results to be

$$1 = 2R\alpha$$

Therefore, if the vehicle is covering a circular trajectory with a radius of curvature R at a velocity v, it exits the detector field of view after a period of time t, which is given by the following relation:

$$t = \frac{\ell}{v} = \frac{2R\alpha}{v} \tag{8}$$

Field of view opening as a function of the bank angle

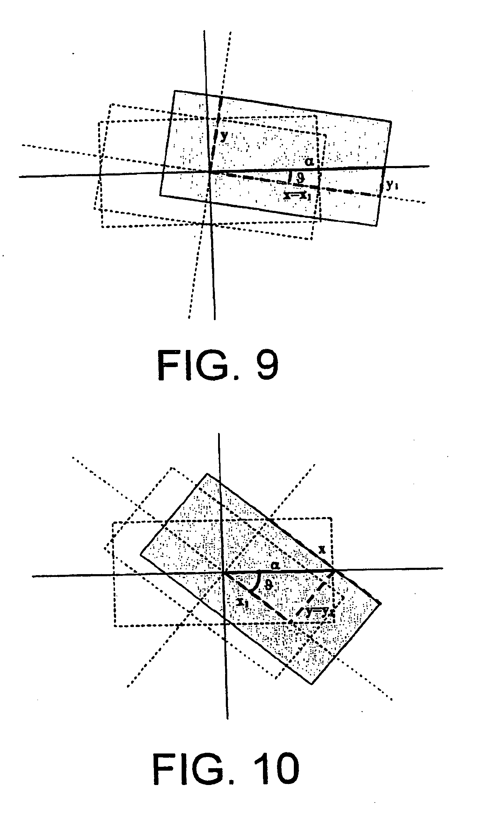

Referring now to Figures 9 and 10, they show examples of the scan field of view projected on the plane perpendicular to the flight direction of a vehicle (helicopter): θ is the roll angle of which the helicopter is inclined relative to the horizontal plane, x and y are the openings of the scan field of view relative to the flight direction (in azimuth and in elevation, respectively), α is the corresponding opening on the horizontal plane.

If $y_1 < y$ (low roll angle, as the example in Fig. 9), the following system of relationships is valid:

$$\begin{cases} \alpha = \dfrac{x}{\cos(\vartheta)} \\ x_1 = \alpha \cdot \cos(\vartheta) \\ y_1 = \alpha \cdot \sin(\vartheta) \end{cases} \tag{9}$$

If y1>=y (high roll angle, as illustrated in Fig. 10), the following system of relationships is valid:

$$\begin{cases} \alpha = \dfrac{x}{\sin(\vartheta)} \\ x_1 = \alpha \cdot \cos(\vartheta) \\ y_1 = \alpha \cdot \sin(\vartheta) \end{cases} \tag{10}$$

For both systems of relationships (9) and (10), x and y have the following values:

$$LOS\ azimut = 20°$$
$$\begin{cases} x = 20° + 20° = 40° \\ y = 15° + 20° = 35° \end{cases} \tag{11}$$

$$LOS\ azimut = 15°$$

$$\begin{cases} x = 20° + 15° = 35° \\ y = 15° + 20° = 35° \end{cases} \tag{12}$$

Detection limit

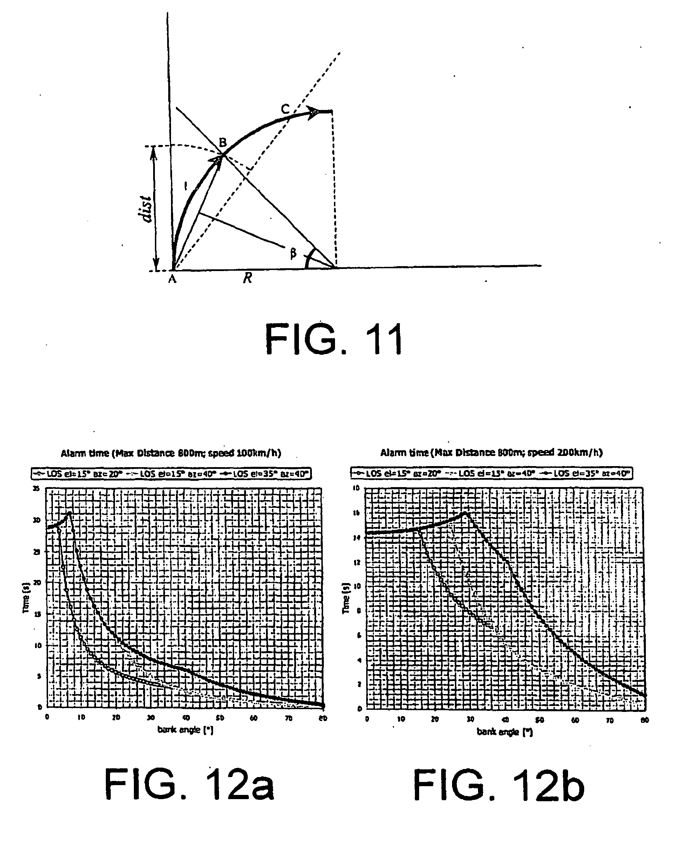

Referring now to Fig. 11, it is pointed out that the scanning of the laser scanning device detects obstacles up to a predetermined distance (dist). If the vehicle trajectory has a large radius of curvature R, the trajectory itself exits the field of view in the case in which

$$\overline{AB} = dist$$

in which dist represents the maximum detection distance. The above indicated condition occurs when the vehicle has covered an arch of circumference of radius R, subtended by the angle $\beta$.

Furthermore, it can be proved that the following relationship is valid:

$$R \cdot \sin\left(\frac{\beta}{2}\right) = \frac{dist}{2} \tag{13}$$

from which

$$\beta = 2 \cdot \arcsin\left(\frac{dist}{2R}\right)$$

$$\Downarrow$$

$$\ell = \beta \cdot R \tag{14}$$

in which l represents the length of the arch of circumference subtended by the angle $\beta$.

Comparison between laser scanning devices having a different overall field of regard

Let us assume to have three different laser scanning devices: a first device with no possibility to modify the line of sight LOS, a second device with the possibility to modify the line of sight LOS only in azimuth, a third device with the possibility to modify the line of sight LOS both in azimuth and in elevation. If the vehicle (helicopter) follows a circular trajectory which radius of curvature R is as a function of the bank angle and the vehicle speed, the laser scanning device will be able to provide, through the LOAM system, an alarm at a maximum period of time that depends on the extent of the field of view and on the maximum detection distance.

Referring now to Figs. 12a and 12b, some examples of the time employed by a vehicle (helicopter) to exit the field of view of the detection system as a function of the bank angle are illustrated, for different laser scanning devices having, respectively, azimuth angle az=20° and elevation angle el=15°; azimuth angle az=40° and elevation angle el=15°; azimuth angle az=20° and elevation angle el=35°.

The maximum detection distance of obstacles is, for example, equal to 800 m (considering stringy shaped obstacles). This limitation becomes stringent for high speeds, so as to prevail on the different opening of the field.

By analyzing the representative graphs of the results obtained, three different trends can be observed: the first (a) is substantially determined by the maximum detection distance, the second (b) by the field of view opening in azimuth, while the third (c) by the field of view opening in elevation; increasing the speed, the first trend (a) extends to larger and larger bank angles (due to the fact that the times get shorter) until they annul the second trend (b) (that occurs in the orange graph, at 200km/h). The bank angle in which the transition from the second (b) to the third (c) trend occurs is determined by the ratio between the two openings, in azimuth and in elevation.

As it can be noticed from the graphs, the opening in elevation increase leads to significant improvements for bank angles larger than 26°. Anyway, it is pointed out that the change between the second (b) and the third (c) trends is actually softer, since the scanning window is not precisely rectangular, as it has been instead assumed in the solved calculations.

Algorithm description

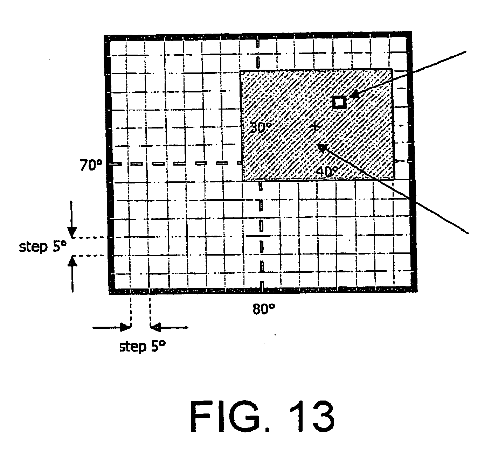

Referring to Fig. 13, the algorithm to determine the line of sight LOS has as its object to frame the space region that the helicopter is going to occupy, so as to be able to verify that it is free from obstacles.

Therefore, the trajectory pointer, which is located in the secant direction at the distance arranged on the control panel, has always to be within the Field of Regard.

Since the trajectory, if it is circular, covers a space region between the "flight vector" (tangent to the bend) and the trajectory pointer, the line of sight LOS tries to frame both of them, and if that would not be possible, it privileges the trajectory pointer.

The discretization with which the LOS movement occurs is of 5° in the two azimuth and elevation directions. Furthermore, a hysteresis has to be predicted to avoid a continuous displacement of the LOS itself. If it would not be possible to frame the trajectory pointer because of a too narrow bend, or anyway because of a helicopter movement outside the field of view FV, a warning signal is provided.

**Claims**

1.  A laser scanning device (100), comprising:

    - a reflecting mirror (101);
    - a support base (102) to which the reflecting mirror (101) is operatively associated, said support base being representative of a reference horizontal plane (PRIF); and
    - first moving means of the reflecting mirror (101) adapted to generate a first rotational movement of the reflecting mirror (101) around a first rotational axis (A1) passing through the centre of said reflecting mirror (101), said first rotational axis (A1) being inclined by a preset first angle relative to the reference plane (PRIF), such first rotational movement allowing the scanning device (100) to trace an elongated circle-shape scanning figure;

    **characterised in that** said device furthermore comprises

    - second moving means of the reflecting mirror (101) adapted to generate a second rotational movement of the reflecting mirror (101) about a second rotational axis (A2) perpendicular relative to the reference horizontal plane (PRIF), said second rotational movement allowing the movement of the reflecting mirror (101) from a first reference scanning position towards at least one second scanning position arranged at a preset angular distance relative to the first reference scanning position, and
    third moving means of the reflecting mirror (101) adapted to generate a third rotational movement of the reflecting mirror (101) about a third rotational axis (A3) so as to change the first inclination angle of the first rotational axis (A1) relative to the reference horizontal plane (PRIF).

2.  The device (100) according to claim 1, wherein said third moving means of the reflecting mirror (101) comprise a brushless motor of a triphase type, mechanically associated to the third rotational axis (A3) of the reflecting mirror (101).

3.  The device (100) according to claim 2, wherein the third moving means of the reflecting mirror (101) further comprise a pulley, which is operatively associated to the third rotational axis (A3), and a drive belt, the brushless motor of a triphase type being mechanically associated to the third rotational axis (A3) through the pulley and the drive belt.

4.  The device (100) according to claim 3, further comprising an encoder (END) operatively associated to the third rotational axis (A3), so arranged as to provide a piece of information to a control unit which is remote relative to the scanning device (100), representative of the inclination of the first rotational axis (A1) relative to the reference horizontal plane (PRIF).

5. The device (100) according to claim 4, further comprising an encoder operatively associated to the first rotational axis (A1), so arranged as to provide a piece of information to the remote control unit, representative of the inclination of the first reference axis (A1) relative to an axis (AN) which is normal to the reflecting mirror (101).

6. The device (100) according to claim 5, further comprising an encoder operatively associated to the second rotational axis (A2) so as to provide a piece of information to the remote control unit, representative of the inclination of the first reference axis (A1) projection on the reference horizontal plane (PRIF) relative to a reference direction (DRIF).

7. The device (100) according to claim 1, wherein the first and the second moving means comprise respective brushless-type motors which are mechanically connected to the first (A1) and the second (A3) rotational axes, respectively.

8. The device (100) according to claim 1, wherein the third moving means of the reflecting mirror (101) are such as to generate the third rotational movement of the reflecting mirror (101) about the third rotational axis (A3) so as to increase the first inclination angle of the first rotational axis (A1) relative to the preset first inclination angle.

9. The device (100) according to claim 1, wherein the third moving means of the reflecting mirror (101) are such as to generate the third rotational movement of the reflecting mirror (101) about the third rotational axis (A3) so as to decrease the first inclination angle of the first rotational axis (A1) relative to the preset first inclination angle.

10. The device (100) according to claim 1, wherein said device (100) results to be so arranged as to be installed on board of an aircraft vehicle, for example, a helicopter o an aeroplane.

11. The device (100) according to claim 1, wherein said device results to be so arranged as to be installed in a ground-based position to monitor an internal or external environment.

12. A laser scanning system, comprising:

   - a laser scanning device (100) according to any one of the preceding claims;
   - a remote control unit, operatively associated to the laser scanning device (100), arranged to control the laser scanning device (100).

13. The laser scanning system according to claim 12, wherein the remote control unit is arranged to perform a control algorithm of the scanning figure generable by the scanning device (100) on the basis of the piece of information representative of the inclination of the first rotational axis (A1) relative to the reference horizontal plane (PRIF), the piece of information representative of the inclination of the first reference axis (A1) relative to an axis (AN) which is normal to the reflecting mirror (101), the piece of information representative of the inclination of the first reference axis (A1) projection on the reference horizontal plane (PRIF) relative to the reference direction (DRIF).

14. The laser scanning system according to claim 13, wherein the remote control unit results to be so arranged as to further perform an algorithm for the estimation of a vehicle trajectory, the remote control unit being so arranged as to control the first, second, and third rotational movements of the reflecting mirror (101) as a function of the estimated trajectory.

15. The laser scanning system according to claim 14, wherein the control unit is further so arranged as to perform a calculation algorithm of the direction of the centre of the scanning device (100) line of sight.


**Patentansprüche**

1. Laserabtastvorrichtung (100), umfassend:

   - einen Reflektionsspiegel (101);
   - eine Tragbasis (102), der der Reflektionsspiegel (101) betriebsmäßig zugeordnet ist, wobei die Tragbasis eine horizontale Referenzebene (PRIF) repräsentiert; und
   - erste Bewegungsmittel des Reflektionsspiegels (101), die dazu ausgelegt sind, eine erste Drehbewegung des Reflektionsspiegels (101) um eine erste Drehachse (A1) herum zu erzeugen, welche durch die Mitte des Reflektionsspiegels (101) hindurchgeht, wobei die erste Drehachse (A1) um einen vorbestimmten ersten Winkel relativ zu der Referenzebene (PRIF) geneigt ist, so dass die erste Drehbewegung erlaubt, dass die Abtastvorrichtung (100) eine länglich kreisförmige Abtastfigur abfährt;

**dadurch gekennzeichnet, dass** die Vorrichtung ferner umfasst:

- zweite Bewegungsmittel des Reflektionsspiegels (101), die dazu ausgelegt sind, eine zweite Drehbewegung des Reflektionsspiegles (101) um eine zweite Drehachse (A2) herum zu erzeugen, welche relativ zu der horizontalen Referenzebene (PRIF) senkrecht ist, wobei die zweite Drehbewegung die Bewegung des Reflektionsspiegels (101) von einer ersten Referenzabtastposition zu zumindest einer zweiten Abtastpostion erlaubt, die mit einem vorbestimmten Winkelabstand relativ zu der ersten Referenzabtastposition angeordnet ist, und dritte Bewegungsmittel des Reflektionsspiegels (101), die dazu ausgelegt sind, eine dritte Drehbewegung des Reflektionsspiegels (101) um eine dritte Drehachse (A3) herum zu erzeugen, um den ersten Neigungswinkel der ersten Drehachse (A1) relativ zur horizontalen Referenzebene (PRIF) zu verändern.

2. Die Vorrichtung (100) nach Anspruch 1, worin die dritten Bewegungsmittel des Reflektionsspiegels (101) einen bürstenlosen Dreiphasenmotor aufweisen, der der dritten Drehachse (A3) des Reflektionsspiegels (101) mechanisch zugeordnet ist.

3. Die Vorrichtung (100) nach Anspruch 2, worin die dritten Bewegungsmittel des Reflektionsspiegels (101) ferner eine Riemenscheibe, die der dritten Drehachse (A3) betriebsmäßig zugeordnet ist, sowie einen Antriebsriemen aufweisen, wobei der bürstenlose Dreiphasenmotor durch die Riemenscheibe und den Antriebsriemen mechanisch der dritten Drehachse (A3) zugeordnet ist.

4. Die Vorrichtung (100) nach Anspruch 3, die ferner einen Codierer (END) aufweist, der der dritten Drehachse (A3) betriebsmäßig zugeordnet ist und so angeordnet ist, dass er ein Informationsstück, das die Neigung der ersten Drehachse (A1) relativ zur horizontalen Referenzebene (PRIF) repräsentiert, an eine Steuereinheit liefert, die relativ zur Abtastvorrichtung (100) entfernt ist.

5. Die Vorrichtung (100) nach Anspruch 4, die ferner einen Codierer aufweist, der der ersten Information an die Fernsteuereinheit zugeordnet ist, welche die Neigung der ersten Referenzachse (A1) relativ zu einer Achse (AN) repräsentiert, welche normal zum Reflektionsspiegel (101) ist.

6. Die Vorrichtung (100) nach Anspruch 5, die ferner einen Codierer aufweist, der der zweiten Drehachse (A2) betriebsmäßig zugeordnet ist, um der Fernsteuereinheit ein Informationsstück zu liefern, das die Neigung der ersten Referenzachse (A1) in Projektion auf die horizontale Referenzebene (PRIF) relativ zu einer Referenzrichtung (DRIF) repräsentiert.

7. Die Vorrichtung (100) nach Anspruch 1, worin die ersten und zweiten Bewegungsmittel jeweilige bürstenlose Motoren aufweisen, die jeweils der ersten (A1) und der zweiten (A3) Drehachse mechanisch zugeordnet sind.

8. Die Vorrichtung (100) nach Anspruch 1, worin die dritten Bewegungsmittel des Reflektionsspiegels (101) so sind, dass sie die dritte Drehbewegung des Reflektionsspiegels (101) um die dritte Drehachse (A3) herum erzeugen, um den ersten Neigungswinkel der ersten Drehachse (A1) relativ zu dem vorbestimmten ersten Neigungswinkel zu vergrößern.

9. Die Vorrichtung (100) nach Anspruch 1, worin die dritten Bewegungsmittel des Reflektionsspiegels (101) so sind, dass sie die dritte Drehbewegung des Reflektionsspiegels (101) um die dritte Drehachse (A3) herum erzeugen, um den ersten Neigungswinkel der ersten Drehachse (A1) relativ zu dem vorbestimmten ersten Neigungswinkel zu verringern.

10. Die Vorrichtung (100) nach Anspruch 1, worin die Vorrichtung (100) im Ergebnis so angeordnet ist, dass sie an Bord eines Luftfahrzeugs angebracht ist, zum Beispiel einem Helikopter oder einem Flugzeug.

11. Die Vorrichtung (100) nach Anspruch 1, worin die Vorrichtung im Ergebnis so angeordnet ist, dass sie in einer bodenbasierenden Position angebracht ist, um eine innere oder äußere Umgebung zu überwachen.

12. Laserabtastsystem, umfassend:

- eine Laserabtastvorrichtung (100) nach einem der vorhergehenden Ansprüche;

- eine Fernsteuereinheit, die der Laserabtastvorrichtung (100) betriebsmäßig zugeordnet ist, angeordnet, um die Laserabtastvorrichtung (100) zu steuern/zu regeln.

13. Das Laserabtastsystem nach Anspruch 12, worin die Fernsteuereinheit angeordnet ist, um einen Steueralgorithmus der Abtastfigur durchzuführen, der von der Abtastvorrichtung (100) erzeugbar ist, auf der Basis des Informationsstücks, das die Neigung der ersten Drehachse (A1) relativ zur horizontalen Referenzebene (PRIF) repräsentiert, des Informationsstücks, das die Neigung der ersten Referenzachse (A1) relativ zu einer Achse (AN) repräsentiert, welche zu dem Reflektionsspiegel (101) normal ist, des Informationsstücks, das die Neigung der ersten Referenzachse (A1) in Projektion auf die horizontale Referenzebene (PRIF) relativ zu der Referenzrichtung (DRIF) repräsentiert.

14. Das Laserabtastsystem nach Anspruch 13, worin die Fernsteuereinheit im Ergebnis so angeordnet ist, dass sie ferner einen Algorithmus für die Schätzung einer Fahrzeugtrajektorie durchführt, wobei die Fernsteuereinheit so angeordnet ist, dass sie die ersten, zweiten und dritten Drehbewegungen des Reflektionsspiegels (101) als Funktion der geschätzten Trajektorije steuert/regelt.

15. Das Laserabtastsystem nach Anspruch 14, worin die Steuereinheit ferner so angeordnet ist, dass sie einen Rechenalgorithmus der Richtung des Zentrums der Abtastvorrichtung (100) in Sichtlinie durchführt.

**Revendications**

1. Dispositif de balayage à laser (100), comprenant :

   - un miroir de réflexion (101) ;
   - une base de support (102) à laquelle le miroir de réflexion (101) est associé de manière opérationnelle, ladite base de support étant représentative d'un plan horizontal de référence (PRIF) ; et
   - des premiers moyens de déplacement du miroir de réflexion (101) conçus pour générer un premier mouvement de rotation du miroir de réflexion (101) autour d'un premier axe de rotation (A1) passant par le centre dudit miroir de réflexion (101), ledit premier axe de rotation (A1) étant incliné d'un premier angle présélectionné par rapport au plan de référence (PRIF), ce premier mouvement de rotation permettant au dispositif de balayage (100) de tracer une figure de balayage en forme de cercle allongée ;

   **caractérisé en ce que** ledit dispositif comprend en outre :

   - des deuxièmes moyens de déplacement du miroir de réflexion (101) conçus pour générer un deuxième mouvement de rotation du miroir de réflexion (101) autour d'un deuxième axe de rotation (A2) perpendiculaire au plan horizontal de référence (PRIF), ledit deuxième mouvement de rotation permettant le déplacement du miroir de réflexion (101) d'une première position de balayage de référence vers au moins une deuxième position de balayage agencée à une distance angulaire présélectionnée par rapport à la première position de balayage de référence, et
   - des troisièmes moyens de déplacement du miroir de réflexion (101) conçus pour générer un troisième mouvement de rotation du miroir de réflexion (101) autour d'un troisième axe de rotation (A3) de manière à modifier le premier angle d'inclinaison du premier axe de rotation (A1) par rapport au plan horizontal de référence (PRIF).

2. Dispositif (100) selon la revendication 1, dans lequel lesdits troisièmes moyens de déplacement du miroir de réflexion (101) comprennent un moteur sans balais d'un type triphasé, associé mécaniquement au troisième axe de rotation (A3) du miroir de réflexion (101).

3. Dispositif (100) selon la revendication 2, dans lequel les troisièmes moyens de déplacement du miroir de réflexion (101) comprennent en outre une poulie, qui est associée de manière opérationnelle au troisième axe de rotation (A3), et une courroie d'entraînement, le moteur sans balais d'un type triphasé étant associé mécaniquement au troisième axe de rotation (A3) par l'intermédiaire de la poulie et de la courroie d'entraînement.

4. Dispositif (100) selon la revendication 3, comprenant en outre un encodeur (END) associé de manière opérationnelle au troisième axe de rotation (A3), agencé de manière à fournir un élément d'informations à une unité de commande qui est à distance par rapport au dispositif de balayage (100), représentatif de l'inclinaison du premier axe de rotation (A1) par rapport au plan horizontal de référence (PRIF).

**5.** Dispositif (100) selon la revendication 4, comprenant en outre un encodeur associé de manière opérationnelle au premier axe de rotation (A1) de manière à fournir un élément d'informations à l'unité de commande à distance, représentatif de l'inclinaison du premier axe de référence (A1) par rapport à un axe (AN) qui est normal au miroir de réflexion (101).

**6.** Dispositif (100) selon la revendication 5, comprenant en outre un encodeur associé de manière opérationnelle au deuxième axe de rotation (A2) de manière à fournir un élément d'informations à l'unité de commande à distance, représentatif de l'inclinaison de la projection du premier axe de référence (A1) sur le plan horizontal de référence (PRIF) par rapport à une direction de référence (DRIF).

**7.** Dispositif (100) selon la revendication 1, dans lequel les premiers et deuxièmes moyens de déplacement comprennent des moteurs de type sans balais respectifs qui sont reliés mécaniquement aux premier (A1) et deuxième (A3) axes de rotation, respectivement.

**8.** Dispositif (100) selon la revendication 1, dans lequel les troisièmes moyens de déplacement du miroir de réflexion (101) sont tels qu'ils génèrent le troisième mouvement de rotation du miroir de réflexion (101) autour du troisième axe de rotation (A3) de manière à augmenter le premier angle d'inclinaison du premier axe de rotation (A1) par rapport au premier angle d'inclinaison présélectionné.

**9.** Dispositif (100) selon la revendication 1, dans lequel les troisièmes moyens de déplacement du miroir de réflexion (101) sont tels qu'ils génèrent le troisième mouvement de rotation du miroir de réflexion (101) autour du troisième axe de rotation (A3) de manière à diminuer le premier angle d'inclinaison du premier axe de rotation (A1) par rapport au premier angle d'inclinaison présélectionné.

**10.** Dispositif (100) selon la revendication 1, dans lequel ledit dispositif (100) est en conséquence agencé de manière à être installé à bord d'un aéronef, par exemple, un hélicoptère ou un avion.

**11.** Dispositif (100) selon la revendication 1, dans lequel ledit dispositif est en conséquence agencé de manière à être installé à une position au sol pour surveiller un environnement interne ou externe.

**12.** Système de balayage à laser, comprenant :

- un dispositif de balayage à laser (100) selon l'une quelconque des revendications précédentes ;
- une unité de commande à distance, associée de manière opérationnelle au dispositif de balayage à laser (100), agencée pour commander le dispositif de balayage à laser (100).

**13.** Système de balayage à laser selon la revendication 12, dans lequel l'unité de commande à distance est agencée pour mettre en oeuvre un algorithme de commande de la figure de balayage pouvant être générée par le dispositif de balayage (100) sur la base de l'élément d'informations représentatif de l'inclinaison du premier axe de rotation (A1) par rapport au plan horizontal de référence (PRIF), de l'élément d'informations représentatif de l'inclinaison du premier axe de référence (A1) par rapport à un axe (AN) qui est normal au miroir de réflexion (101), de l'élément d'informations représentatif de l'inclinaison de la projection du premier axe de référence (A1) dans le plan horizontal de référence (PRIF) par rapport à la direction de référence (DRIF).

**14.** Système de balayage à laser selon la revendication 13, dans lequel l'unité de commande à distance est en conséquence agencée en outre de manière à mettre en oeuvre un algorithme pour estimer une trajectoire de véhicule, l'unité de commande à distance étant agencée de manière à commander les premier, deuxième et troisième mouvements de rotation du miroir de réflexion (101) en fonction de la trajectoire estimée.

**15.** Système de balayage à laser selon la revendication 14, dans lequel l'unité de commande est en outre agencée de manière à mettre en oeuvre un algorithme de calcul de la direction du centre de la ligne de vision du dispositif de balayage (100).

FIG. 1

EP 2 175 303 B1

FIG. 2

FIG. 3

FIG. 4

EP 2 175 303 B1

# FIG. 5

# FIG. 6

**FIG. 7**

**FIG. 8**

# FIG. 9

# FIG. 10

FIG. 11

FIG. 12a

FIG. 12b

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1423730 B1